# EUROPEAN PATENT APPLICATION

(11) **EP 2 546 502 A1**
(43) Date of publication of application: **16.01.2013**
(21) Application number: 10836826.7
(22) Date of filing: 11.03.2010
(51) Int. Cl.: F02D 41/38, F02D 41/04, F02D 43/00

(54) **CONTROLLER FOR INTERNAL COMBUSTION ENGINE**

(71) Applicant: Toyota Jidosha Kabushiki Kaisha, Toyota-shi, Aichi 471-8571 (JP)
(72) Inventor: NOGI, Yoshito, Toyota-shi Aichi 471-8571 (JP)
(74) Representative: Kuhnen & Wacker
(86) International application number: PCT/JP2010/001764
(87) International publication number: WO 2011/111109

(57) **Abstract**

A control device for an internal combustion engine switches an air-fuel ratio of an air-fuel mixture in a cylinder from a first air-fuel ratio leaner than stoichiometry for normal operation to a second air-fuel ratio richer than the stoichiometry. During a switching period from beginning to end of the switching, the control device carries out intake throttling to control the air-fuel ratio of the air-fuel mixture in the cylinder to a third air-fuel ratio richer than the first air-fuel ratio and leaner than the stoichiometry, while learning a correction value for a fuel injection amount. During the switching period, before the intake throttling is completed, the control device carries out such a post-injection as prevents injected fuel from being combusted and learns the correction value. After the intake throttling is completed, the control device carries out such an after-injection as allows the injected fuel to be incompletely combusted and learns the correction value.

## Description

### Technical Field

The present invention relates to a control device for an internal combustion engine, and in particular, to a control device for an internal combustion engine which is configured to switch the air-fuel ratio of an air-fuel mixture in a cylinder from a lean value to a rich value.

### Background Art

As is known, in internal combustion engines such as diesel engines in which combustion occurs in a lean state (excessive oxygen), an NOx catalyst configured to reduce and purify nitrogen oxide (NOx) is provided in an exhaust passage. Furthermore, storage reduction NOx catalysts are known which are configured to emit NOx for reduction in a rich state (excessive fuel).

In order to allow periodic emission of NOx stored in the storage reduction NOx catalyst and sulfur attaching to the catalyst in connection with sulfur (S) components in the fuel, the air-fuel ratio of the air-fuel mixture is periodically switched from the lean value to the rich value. That is, an air-fuel mixture that is rich compared to stoichiometry (theoretical air-fuel ratio) is combusted in a cylinder (this is called intra-cylinder rich combustion). The resulting rich exhaust gas is supplied to the catalyst to recover the catalyst.

While the air-fuel ratio of an air-fuel mixture is controllably kept rich, the amount of fuel injected into the cylinder may be feedback-controlled utilizing a value detected by an air-fuel ratio sensor provided downstream of the catalyst. However, when the exhaust air-fuel ratio is rich, an output from the air-fuel ratio sensor may shift toward the rich side under the effect of hydrogen (H₂) or toward the lean side under the effect of hydrogen carbide (HC). This results in an error between the detected value from the air-fuel ratio sensor and the actual exhaust air-fuel ratio. Hence, it is difficult of accurately feedback-control the air-fuel ratio to a target value simply by utilizing the detected value from the air-fuel ratio sensor.

To prevent this, the following operation may be performed. While the air-fuel ratio is being switched from the lean value to the rich value, the air-fuel ratio may be controlled to an intermediate value that is richer than the air-fuel ratio obtained during normal operation but is leaner than the stoichiometry. Then, an error or such a correction value as compensates for the error is learned. This operation is performed because the detected value from the air-fuel ratio sensor located after the catalyst and in a lean atmosphere is considered to be very accurate.

A related technique is described in Patent Literature 1. Lean combustion and rich combustion are switched in order to control a catalyst. In the lean combustion state, a correction gain is calculated which corresponds to the ratio of a target A/F value to a measured A/F value; the target A/F value corresponds to the ratio of the target amount of fresh air required to achieve a requested torque to a target injection amount, and the measured A/F value is measured by an A/F sensor. In the rich combustion state, the correction gain is multiplied by the target fresh-air amount to obtain a corrected target fresh-air amount. This technique is intended to suppress a difference in torque between the lean combustion state and the rich combustion state.

When the air-fuel ratio is shifted from the lean value to the intermediate value, a throttle valve is operated in a direction where the valve is closed, to carry out intake throttling. However, even if the throttle valve immediately reaches a target opening degree, a certain amount of time is required to reduce the pressure (that is, the intake pressure) in an intake passage extending from the throttle valve to a cylinder. Such a delay involved in the intake throttling prevents the learning during the delay period. This naturally delays a timing for starting the learning.

Furthermore, an after-injection may be carried out during the learning to control the air-fuel ratio to the intermediate value. However, the after-injection also cannot be carried out during the intake throttling delay period. This is because, during the intake throttling delay period, intake pressure fails to lower sufficiently, resulting in a relatively high intra-cylinder pressure and the presence of excessive air in the cylinder. The after-injection allows fuel to be combusted in the cylinder in what is called a semi-combustion state. Hence, with excessive air present in the cylinder, an intra-cylinder temperature is low during the after-injection. This may lead to a misfire.

As described above, during the intake throttling delay period, neither the after-injection nor the learning can be carried out. Thus, the after-injection and the learning need to stand by until the intake throttling is completed. This delays the timing to start the learning, thus increasing the time required to switch the air-fuel ratio from the lean value to the rich value.

Thus, the present invention has been developed in view of the above-described circumstances. An object of the present invention is to provide a control device for an internal combustion engine which enables the learning to be carried out during the intake throttling delay period.

### Citation List

### Patent Literature

Patent Literature 1: Japanese Patent Laid-Open No. 2008-297968

### Summary of Invention

An embodiment of the present invention provides a control device for an internal combustion engine which is configured to switch an air-fuel ratio of an air-fuel mixture in a cylinder from a first air-fuel ratio leaner than stoichiometry for normal operation to a second air-fuel ratio richer than the stoichiometry and to carry out intake throttling during a switching period from beginning to end of the switching to control the air-fuel ratio of the air-fuel mixture in the cylinder to a third air-fuel ratio richer than the first air-fuel ratio and leaner than stoichiometry, while learning a correction value for a fuel injection amount, the control device being characterized in that:
during the switching period, before the intake throttling is completed, the control device carries out such a post-injection as prevents injected fuel from being combusted and learns the correction value, and after the intake throttling is completed, the control device carries out such an after-injection as allows the injected fuel to be incompletely combusted and learns the correction value.

Preferably, a catalyst and an air-fuel ratio sensor are provided in an exhaust passage in the internal combustion engine in order from an upstream side, and the switching to the second air-fuel ratio is intended to recover the catalyst.

Preferably, in controlling the air-fuel ratio to the third air-fuel ratio, the control device injects, into the cylinder, fuel in an amount calculated from a detected value from an intake amount sensor and which is equivalent to the third air-fuel ratio, and
in learning the correction value, the control device calculates the correction value based on the value of the third air-fuel ratio and the detected value from the air-fuel ratio sensor resulting from the injection of the fuel in the amount equivalent to the third air-fuel ratio.

Preferably, after switching the air-fuel ratio to the second air-fuel ratio, the control device uses the learned correction value to correct the fuel injection amount.

Preferably, in correcting the fuel injection amount using the learned correction value, the control device calculates a fuel injection amount equivalent to the second air-fuel ratio calculated from the detected value from the intake amount sensor and then corrects the fuel injection amount equivalent to the second air-fuel ratio, using the learned correction value.

Preferably, in learning the correction value, the control device calculates a plurality of correction values corresponding to a plurality of fuel injections and then determines an average of the correction values corresponding to a final correction value.

Preferably, in carrying out the post-injection, the control device performs one of a divided post-injection and a single post-injection depending on an operation status of the internal combustion engine.

Preferably, a turbocharger is provide in the exhaust passage in the internal combustion engine, and the internal combustion engine further comprises a bypass passage which bypasses the turbocharger and a bypass valve configured to open and close the bypass passage, and
the bypass valve is opened at least when the post-injection is carried out.

Preferably, a burner device is provided in the exhaust passage in the internal combustion engine, and the burner device comprises a fuel supply nozzle, a glow plug, and an oxidation catalyst, and
the control device activates the glow plug of the burner device at least when the post-injection is carried out.

Preferably, an electrically heated catalyst is provided in the exhaust passage in the internal combustion engine, and
the control device activates the electrically heated catalyst at least when the post-injection is carried out.

The present invention is very effective for enabling learning during the intake throttling delay period.

### Brief Description of Drawings

[Fig. 1] Fig. 1 is a schematic diagram showing an internal combustion engine according to an embodiment of the present invention;
[Fig. 2] Fig. 2 is a time chart illustrating a comparative example of the present embodiment;
[Fig. 3] Fig. 3 is a time chart illustrating an example of the present embodiment;
[Fig. 4] Fig. 4 is a diagram illustrating the relationship between Fig. 4A and Fig. 4B;
[Fig. 4A] Fig. 4A is a flowchart of a basic example;
[Fig. 4B] Fig. 4B is a flowchart of the basic example;
[Fig. 5] Fig. 5 is a diagram illustrating the relationship between Fig. 5A and Fig. 5B;
[Fig. 5A] Fig. 5A is a flowchart of the first modification;
[Fig. 5B] Fig. 5B is a flowchart of the first modification;
[Fig. 6] Fig. 6 is a diagram illustrating the relationship between Fig. 6A and Fig. 6B;
[Fig. 6A] Fig. 6A is a flowchart of the second modification;
[Fig. 6B] Fig. 6B is a flowchart of the second modification;
[Fig. 7] Fig. 7 is a schematic diagram showing an essential part of an exhaust system in a third modification;
[Fig. 8] Fig. 8 is a diagram illustrating the relationship between Fig. 8A and Fig. 8B;
[Fig. 8A] Fig. 8A is a flowchart of the third modification; and
[Fig. 8B] Fig. 8B is a flowchart of the third modification.

### Description of Embodiments

A preferred embodiment of the present invention will be described based on the accompanying drawings. In the description below, the air-fuel ratio is hereinafter sometimes referred to as the "A/F". Furthermore, the term "absorption" or "adsorption" may be used synonymously with the term "storage".

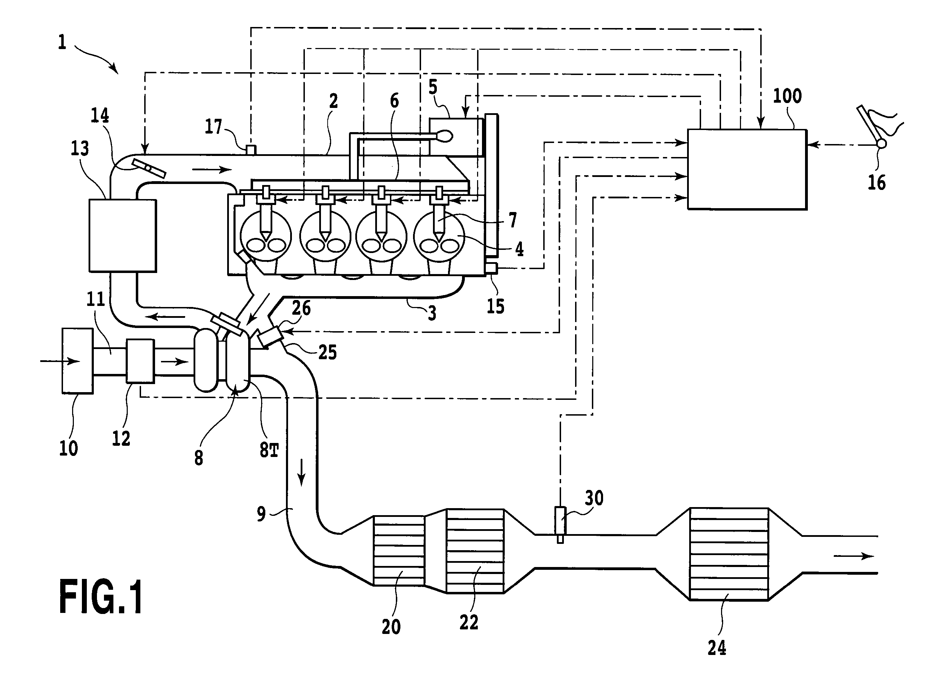

Fig. 1 schematically shows an internal combustion engine according to the embodiment of the present invention. Reference numeral 1 denotes a compression-ignited internal combustion engine for automobiles, that is, a diesel engine. Reference numeral 2 denotes an intake manifold that is in communication with an intake port. Reference numeral 3 denotes an exhaust manifold that is in communication with an exhaust port. Reference numeral 4 denotes a combustion chamber. The combustion chamber 4 is defined by a cylinder and a piston. The expression "in the cylinder" or "intra-cylinder" is synonymous with the expression "in the combustion chamber" or "intra-combustion chamber". In the present embodiment, fuel is fed from a fuel tank (not shown in the drawings) to a high-pressure pump 5, which then pressure-feeds the fuel to a common rail 6. The fuel is accumulated in the common rail 6 in a high pressure state. The high-pressure fuel in the common rail 6 is injected and fed from an injector 7 directly into the combustion chamber 4.

Exhaust gas from the engine 1 flows from the exhaust manifold 3 through a turbocharger 8 to an exhaust passage 9 located downstream of the turbocharger 8. The exhaust gas is subjected to a purification process as described below and then discharged to the air. The internal combustion engine includes a bypass passage 25 that bypasses the turbocharger 8 and a bypass valve 26 configured to open and close the bypass passage 25.

On the other hand, intake air introduced from an air cleaner 10 into an intake passage 11 passes through an air flow meter 12, the turbocharger 8, an intercooler 13, and a throttle valve 14 in order and then to the intake manifold 2. The air flow meter 22 is an intake amount sensor configured to detect an intake amount (the amount air sucked). Specifically, the air flow meter 22 outputs a signal corresponding to the flow rate of intake air. A throttle valve 14 adopted is electronically controlled.

In the exhaust passage 9, an oxidation catalyst 20, a storage reduction NOx catalyst (NSR: NOx Storage Reduction) 22, and a particulate filter (hereinafter referred to as the DPF) are provided in order from the upstream side and in series with each other; the oxidation catalyst 20 oxidizes unburned components (HC, CO, and H₂) in the exhaust gas for purification, the storage reduction NOx catalyst 22 reduces and removes NOx in the exhaust gas, and the particulate filter 24 collects particulates (PM) such as soot in the exhaust gas.

The NOx catalyst 22 is formed of a base material such as alumina Al₂O₃ with rare metal such as platinum Pt and NOx storage components such as potassium K carried on the surface thereof. When exhaust gas that is lean compared to stoichiometry is supplied to the NOx catalyst 22, the NOx in the exhaust is stored in the NOx catalyst 22 in the form of nitrate salt. Furthermore, when exhaust gas that is rich compared to the stoichiometry is supplied to the NOx catalyst 22, the stored NOx is emitted from the NOx catalyst 22 and reacted with atmosphere gas for reduction.

In a diesel engine such as that in the present embodiment, the air-fuel ratio of an air-fuel mixture in the cylinder during normal operation is significantly leaner than the stoichiometry (for example, A/F = 14.6). Thus, exhaust gas that is lean compared to the stoichiometry is supplied to the NOx catalyst 22, in which the NOx in the exhaust is stored. On the other hand, the stored NOx needs to be emitted from the NOx catalyst 22 to periodically recover the NOx catalyst 22. Hence, the air-fuel ratio of the air-fuel mixture in the cylinder is controlled to a value indicative of a higher richness stoichiometry (for example, A/F = 14.0). As a result, rich exhaust gas is supplied to the NOx catalyst 22.

The NOx catalyst 22 has the property to adsorb not only NOx but also sulfur resulting from sulfur components during combustion. The adsorption of sulfur may hinder an NOx storage capacity. Thus, the air-fuel ratio is periodically increased to a rich value as described above in order to desorb the adsorbed sulfur to recover the NOx catalyst 22. The sulfur recovery is carried out at higher temperatures than the NOx recovery.

The engine 1 includes an electronic control unit (hereinafter referred to as an "ECU") 100 serving as control means. The ECU 100 includes a CPU, a ROM, a RAM, an I/O port, and a memory device. The ECU 100 controls the injector 7, the throttle valve 14, the high-pressure pump 5, the bypass valve 26, and the like based on detected values and the like from various sensors so as to perform desired engine control.

The sensors include not only the above-described air flow meter 12 but also a crank angle sensor 15, an accelerator opening degree sensor 16, an intake pressure sensor 17, and an air-fuel ratio sensor 30.

The crank angle sensor 15 outputs a crank pulse signal to the ECU 100 during rotation of a crank shaft. Based on the crank pulse signal, the ECU 100 detects the crank angle of the engine 1 and calculates the rotation speed of the engine 1. The accelerator opening degree sensor 16 outputs, to the ECU 100, a signal corresponding to the opening degree (accelerator opening degree) of an accelerator pedal operated by a user.

The intake pressure sensor 17 outputs, to the ECU 100, a signal corresponding to the intake pressure measured downstream of the throttle valve 14, that is, a signal corresponding to the pressure in the intake passage 11 between the throttle valve 14 and each cylinder. In the present embodiment, the intake pressure sensor 17 is installed in the intake manifold 2.

The air-fuel ratio sensor 30 is provided in the exhaust passage 9 downstream of the NOx catalyst 22 and upstream of the DPF 24 to output a signal corresponding to the air-fuel ratio of the exhaust gas to the ECU 100. The air-fuel ratio sensor 30 is formed of what is called an extensive air-fuel ratio sensor. The air-fuel ratio sensor 30 can continuously detect the air-fuel ratio over a relatively wide range and outputs a signal with a value proportional to the air-fuel ratio.

Now, switching control of the air-fuel ratio and learning of the correction value will be described.

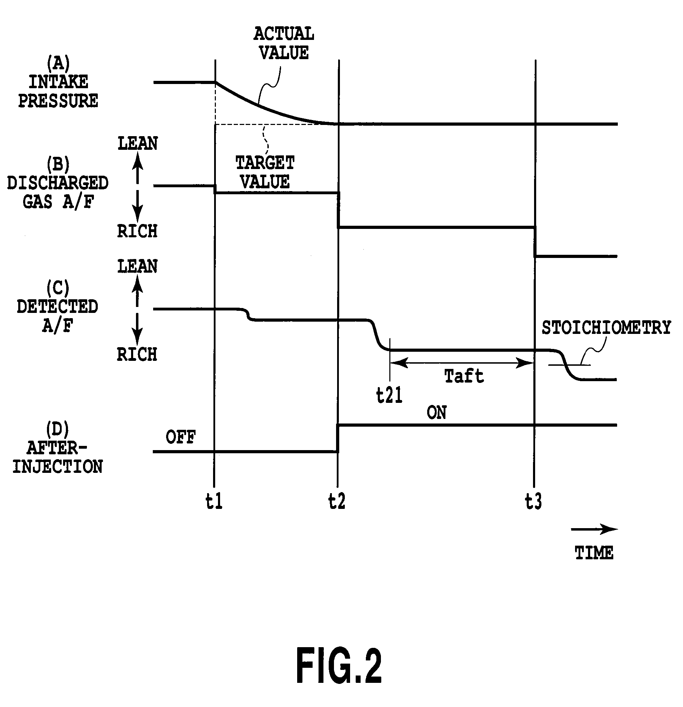

First, before description of an example of the present embodiment, a comparative example on which the example is based will be described with reference to Fig. 2. In Fig. 2, (A) illustrates the intake pressure, and (B) illustrates a discharged gas A/F. The discharged gas A/F refers to the A/F of exhaust gas discharged from the combustion chamber 4. (C) illustrates the value of the A/F detected by the A/F sensor 30 and hereinafter referred to as the detected A/F. (D) illustrates that an after-injection is being carried out or is stopped. In (D), "on" indicates that the after-injection is being carried out, and "off" indicates that the after-injection is stopped.

The "after-injection" as used herein refers to an injection involving incomplete combustion of fuel injected from the injector 7 into the cylinder. In contrast, a "post-injection" described below refers to an injection preventing combustion of fuel injected from the injector 7 into the cylinder. Combustion resulting from the after-injection is referred to as "after-combustion". The after-combustion is not complete combustion but refers to combustion of up to a level where low-temperature oxidation reaction occurs or semi-combustion.

More specifically, when a main injection is provided in which fuel is injected from the injector 7 into the cylinder near a top dead center of a compression stroke, fuel provided by the main injection is substantially completely combusted. The combustion resulting from the main injection is referred to as the "main combustion". The main combustion is high-temperature oxidation reaction. In contrast, the after-injection is a fuel injection carried out while the inside of the cylinder is still hot immediately after the main combustion. A timing for injection corresponds to a CA of 40 to 60 degrees after the top dead center of the compression stroke. The post-injection is a fuel injection carried out a certain time interval after the end of the main combustion. Thus, the post-injection is carried out at an intra-cylinder temperature lower than that during the after-injection period and in retard of the after-injection. The timing for injection corresponds to a CA of 100 to 180 degrees after the top dead center of the compression stroke.

The after-combustion is incomplete combustion and thus involves a large amount of CO generated. On the other hand, the post-injection does not involve combustion but a large amount of HC generated. Furthermore, the after-combustion involves combustion though the combustion is incomplete and thus contributes to an output torque from the engine. On the other hand, the post-injection involves no combustion and thus fails to contribute to the output torque from the engine.

As shown in Fig. 2, the engine is operated normally before time t1. At this time, the air-fuel ratio of the air-fuel mixture in the cylinder is significantly leaner than the stoichiometry. However, at this time, the air-fuel ratio control is essentially not performed. The lean air-fuel ratio is simply the result of the injection, into the cylinder, of a fuel injection amount determined by an engine operation status such as the rotation speed and the accelerator opening degree. The air-fuel ratio during normal operation is hereinafter referred to as a "first air-fuel ratio". A control mode for the normal operation is hereinafter referred to as a "normal control mode".

On the other hand, at and after time t3, the air-fuel ratio of the air-fuel mixture in the cylinder is controllably kept richer than the stoichiometry. The air-fuel ratio during this rich control is hereinafter referred to as a "second air-fuel ratio". A control mode for the rich control is hereinafter referred to as a "rich control mode". The rich control is performed to recover the NOx catalyst 22. In the present embodiment, the value of the second air-fuel ratio is 14.0.

Thus, the air-fuel ratio is switched from the first air-fuel ratio to the second air-fuel ratio. During the switching period from the beginning (t1) to end (t3) of the switching, a correction value for the fuel injection amount is learned. A substantial learning period is between t21 and t3 as shown in Fig. 2. The learned correction value is used to correct the fuel injection amount during the subsequent rich control.

Simultaneously with the beginning of the switching (t1), the throttle valve 14 is activated in a direction where the throttle valve 14 is closed, to start intake throttling. Then, as illustrated in (A), the actual value of the intake pressure decreases gradually toward a target value. At time t2, the actual value reaches the target value. At this time, even if the throttle valve 14 immediately (at a time earlier than time t2) reaches a target opening degree, a certain amount of time is required to reduce the actual intake pressure to the target value because time is required to consume air filled into the intake passage between the throttle valve 14 and the cylinder and then sucked into the combustion chamber. Thus, the intake throttling is delayed.

During the intake throttling delay period (t1 to t2), the fuel injection amount is slightly increased to make the air-fuel ratio of the air-fuel mixture in the cylinder slightly richer in order to suppress a torque difference caused by the intake throttling (see Fig. 2(B)). The after-injection is not carried out yet. During the intake throttling delay period, the intake pressure fails to decrease sufficiently, the intra-cylinder pressure is relatively high, and excessive air is present in the cylinder. Hence, the intra-cylinder temperature is not high enough to cause after-combustion. Carrying out the after-injection in this state may lead to a misfire.

When the intake throttling delay period elapses (t2), the after-injection is immediately carried out to control the air-fuel ratio of the air-fuel mixture in the cylinder to the third air-fuel ratio, which is richer than the first air-fuel ratio and leaner than the stoichiometry. The air-fuel ratio is controlled to the lean third air-fuel ratio in order to restrain an output from the A/F sensor 30 from shifting to the rich side under the effect of hydrogen in the exhaust or to the lean side under the effect of HC in the exhaust. In the present embodiment, the value of the third air-fuel ratio is 17.0. The third air-fuel ratio may be referred to as "intermediate lean". The control mode in which the air-fuel ratio is controlled to the third air-fuel ratio is hereinafter referred to as the "intermediate lean control mode".

The above-described air-fuel ratio shift occurs when the air-fuel ratio is rich. When the air-fuel ratio is rich, the concentration of hydrogen in the exhaust tends to increase in a square proportional manner as the air-fuel ratio shifts from the stoichiometry. Thus, the air-fuel ratio detected by the A/F sensor 30 tends to shift toward the rich side compared to the real value. Furthermore, the A/F sensor 30 is configured to detect the air-fuel ratio based on the concentration of oxygen in exhaust gas having reached an exhaust electrode after passing through a diffusion layer in an outer surface. HC with a high molecular weight has a lower diffusion speed than oxygen molecules. Thus, a high concentration of HC in the exhaust causes the air-fuel ratio detected by the A/F sensor 30 to tend to shift toward the lean side.

In contrast, when the air-fuel ratio is lean, the air-fuel ratio detected by the A/F sensor 30 is expected to be almost equal to the real value. This is why the air-fuel ratio is controlled to the third air-fuel ratio.

Learning of a correction value is started at time t21; a delay time resulting from transportation delay or the like elapses after the beginning of the after-injection, and at time t21, the air-fuel ratio detected by the A/F sensor 30 (this air-fuel ratio is referred to as the detected A/F) converges close to a target A/F equal to the third air-fuel ratio (the target A/F is hereinafter referred to as a "third target A/F). During the learning, a fuel injection amount equivalent to the third air-fuel ratio is calculated from the intake amount detected by the air flow meter 12, that is, the detected intake amount. The injection amount is then divided into a main injection and an after-injection which are subsequently provided by the injector 7.

In this case, the detected A/F is expected to be equal to the third target A/F. However, when at least one of the injection amount and the intake amount is shifted as a result of a manufacturing error in the injector 7 or the air flow meter 12, the detected A/F fails to be equal to the third target A/F. Thus, the correction value used to correct the amount of fuel injected by the injector 7 is calculated from the detected A/F and the target A/F and then memorized. The calculation and memorization are collectively referred to as the learning. The correction value is learned for every injection. After sample data on a plurality of correction values is acquired, the sample data is averaged to determine the final correction value.

Thus, the learning is completed, and at the same time, rich control is started at time t3. The learning during the after-injection is referred to as the "after-learning". A period t21 to t3 during which the after-learning is carried out is referred to as an "after-learning period" and denoted as Taft.

As described above, neither the after-injection nor the learning can be carried out until the intake throttling delay period (t1 to t2) is over. This may delay the timing for starting the learning (t21), thus increasing the period of time (t1 to t3) required to switch from the lean state to the rich state. During the switching period, the engine is operated at an air-fuel ratio richer than that during normal operation. Hence, extension of the switching period inevitably increases fuel consumption. Furthermore, when the switching period is extended, a recovery period from the beginning of the switching (t1) to the end of the rich control is also extended. Then, during the recovery, required conditions fail to be established, resulting in an increase in the probability that the recovery is suspended. As a result, opportunities for recovery may decrease.

Thus, in an example of the present embodiment, the following control is performed to enable the learning to be carried out during the intake throttling delay period.

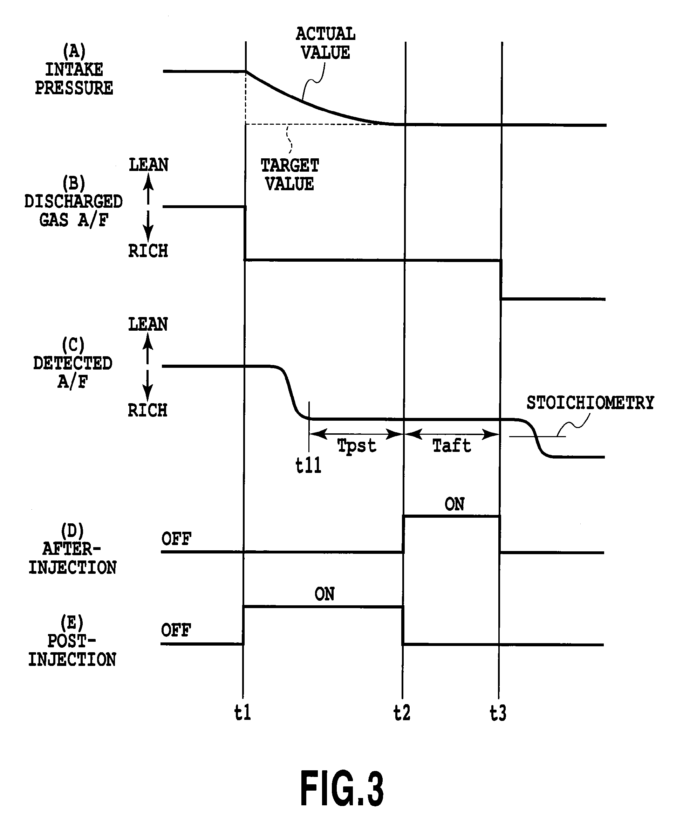

Fig. 3 illustrates an example of the present embodiment. As described above, (A) illustrates the intake pressure, (B) illustrates the discharged gas A/F, (C) illustrates the detected A/F, and (D) illustrates that the after-injection is being carried out or is stopped. Furthermore, (E) illustrates that a post-injection is being carried out or is stopped. The present example is characterized in that the post-injection is carried out during the intake throttling delay period (t1 to t2) and in that the learning is performed during the post-injection.

Before time t1, the engine is operated in the normal control mode, and the first air-fuel ratio, which is significantly lean, is obtained. At and after time t3, the engine is operated in the rich control mode, and the second air-fuel ratio, which is richer than the stoichiometry, is obtained. During the switching period (t1 to t2) for the air-fuel ratio, the correction value for the fuel injection amount is learned. However, the switching period is divided into a former-half intake throttling delay period (t1 to t2) and the subsequent latter half period (t2 to t3). During the intake throttling delay period, a post-injection is carried out. During the latter half period, the after-injection is carried out.

Simultaneously with the beginning of the intake throttling delay period, the intermediate lean control is started to control the air-fuel ratio of the air-fuel mixture in the cylinder to the third air-fuel ratio or the intermediate lean. At this time, the post-injection is started as illustrated in (E). Furthermore, as shown in (A), intake throttling is started. The fuel injection amount is immediately changed to the value equivalent to the third air-fuel ratio. Thus, the discharged gas A/F is also immediately set to a value close to the third air-fuel ratio. On the other hand, the detected A/F is set to a value close to the third air-fuel ratio slightly later than the fuel injection amount and the discharged gas A/F.

At time t11, the detected A/F converges to a value close to the third target A/F, which is equal to the third air-fuel ratio. Then, learning of the correction value is started. During the learning, a fuel injection amount equivalent to the third air-fuel ratio is calculated from a detected intake amount from the air flow meter 12. The injection amount is divided into a main injection and a post-injection which are then provided by the injector 7.

At time t11 when the detected A/F converges close to the third A/F, in most cases, the intake throttling is not completed yet (that is, the internal combustion engine is in the intake throttling delay period). In the present example, before the intake throttling is completed, the post-injection is started and the correction value for the fuel injection amount is learned. The learning is carried out as described above. The learning during the post-injection is hereinafter referred to as the "post-learning". A period t11 to t2 during which the post-learning is carried out is hereinafter referred to as a "post-learning period" and denoted as Tpst.

The post-injection can be carried out even during the intake throttling delay period. This is because the post-injection fails to contribute to the combustion in the cylinder, eliminating the need to take a misfire into account. The post-injection also fails to contribute to the output torque from the engine. In contrast, the after-injection leads to the semi-combustion state and thus contributes to the output torque from the engine. However, calculating what percentage of the amount of the after-injection corresponds to the torque is very difficult. Thus, carrying out the after-injection during the intake throttling delay period prevents torque control from being appropriately performed on the engine. The post-injection can avoid such a disadvantage of the torque control. Hence, in the present example, the post-injection is carried out during the intake throttling delay period.

When the intake throttling is completed to end the intake throttling delay period (t2), the injection form changes from the post-injection to the after-injection, and learning continues to be carried out as is the case with the comparative example. Also at this time, air-fuel ratio is controlled to the third air-fuel ratio.

When a predetermined sample number of correction value data are acquired, the switching period is ended at this point of time (t3). The processing shifts to the rich control. The correction value is repeatedly learned for every injection from the beginning of the post-injection (t11) until the after-injection ends (t3). Then, the sample data on the plurality of correction values is averaged to obtain the final correction value.

As described above, according to the present example, even before the intake throttling is completed, the post-injection is carried out and the correction value is learned. Thus, the timing for starting the learning can be made earlier than that in the comparative example. This enables a reduction in the period (t1 to t3) during which the lean state is switched to the rich state. The present example can thus suppress an increase in fuel consumption and in recovery period and a decrease in the number of recovery opportunities all of which result from the extended switching period.

Furthermore, the earlier timing for starting the learning enables the learning period to be extended, allowing more sample data on the correction value to be acquired. This allows the accuracy of the correction value and thus the learning accuracy to be improved. Alternatively, the shortened switching period enables the rich control period to be extended. This allows the catalyst to be more sufficiently recovered.

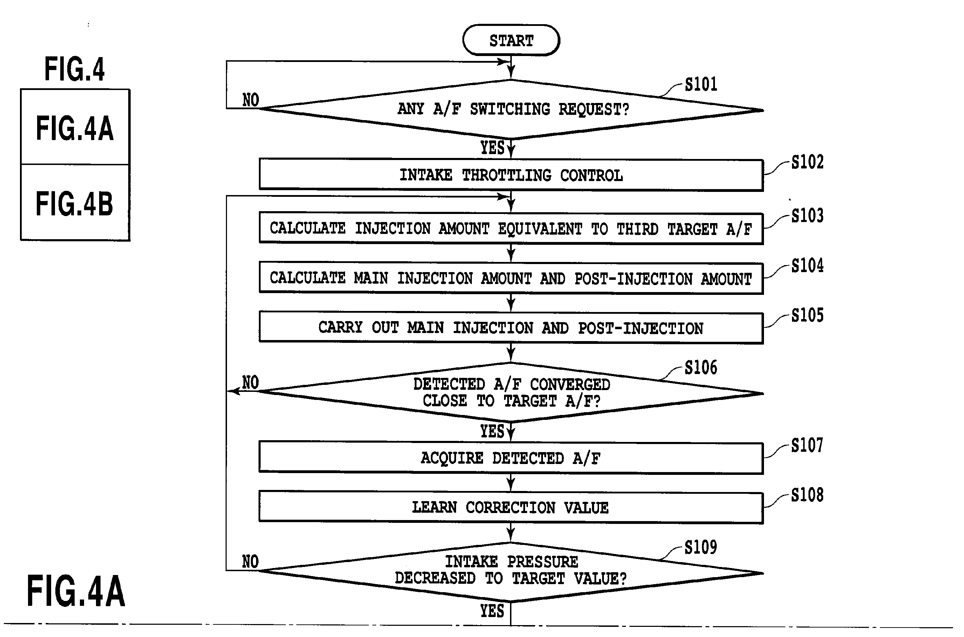

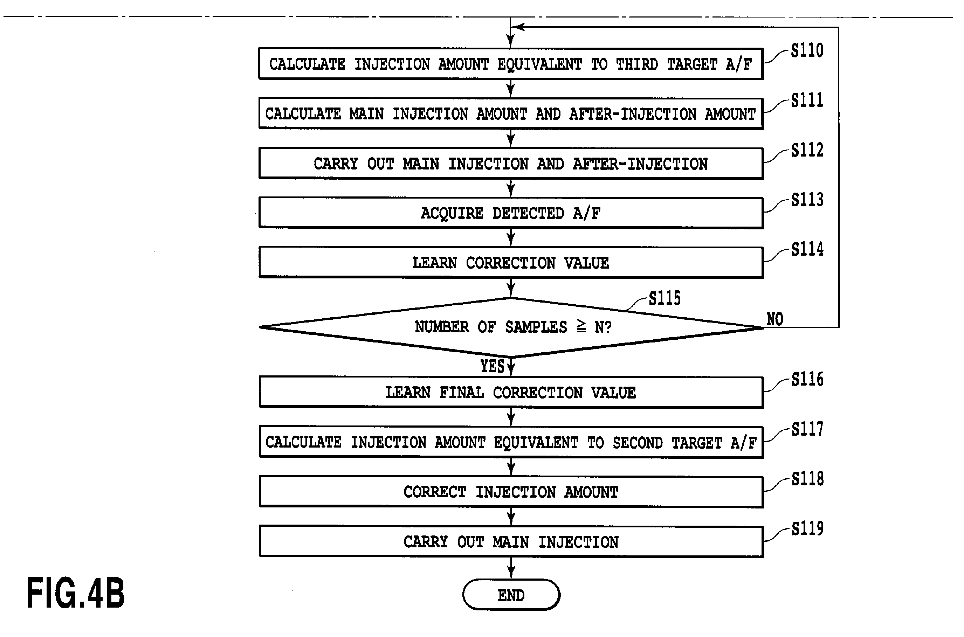

Now, processing related to the air-fuel ratio switching control and learning according to the present example will be described with reference to Fig. 4A and Fig. 4B. The processing is carried out by the ECU 100.

First, in step S101, the ECU 100 determines whether or not an A/F switching request has been made. That is, the ECU 100 determines whether or not the air-fuel ratio of the air-fuel mixture in the cylinder is to be switched, at the current timing, from the first air-fuel ratio to the second air-fuel ratio. The ECU 100 determines that an A/F switching request has been made, for example, (1) if the ECU 100 determines that the engine is to recover the NOx catalyst at the current timing, based on the driving distance and driving pattern of the vehicle and the like and (2) if the ECU 100 determines that the engine is in an intra-cylinder rich combustion enabled area based on the rotation speed and fuel injection amount of the engine. If ECU 100 determines that no A/F switching request has been made, the engine starts to stands by. If the ECU 100 determines that an A/F switching request has been made, the processing proceeds to step S102.

In step S102, the intake throttling control is performed. That is, the throttle valve 14 is activated in the direction of closing. The throttle valve 14 is thus feedback-controlled so as to reduce the actual intake pressure detected by the intake pressure sensor 17 down to a target value.

A method for intake throttling control is not limited to such activation of the throttle valve in the direction of closing. The intake throttling control, that is, intake amount reduction control, can also be performed, for example, by reducing the rotation speed of the turbocharger. In this case, in an engine with the bypass passage 25 and the bypass valve 26 as in the case of the present embodiment, the rotation speed of the turbocharger can be reduced by activating the bypass valve 26 in the direction of opening. Alternatively, a turbocharger with variable vanes in a turbine can be reduced in rotation speed by activating the variable vane in the direction of opening.

Then, the control and learning for the intake throttling delay period (t1 to t2 in Fig. 3) is carried out in steps S103 to S109. First, in step S103, the ECU 100 calculates a fuel injection amount Q corresponding to the third target A/F (in the present example, 17.0). That is, the ECU 100 divides an intake amount (detected intake amount) Ga detected by the air flow meter 12, by the third target A/F to obtain the fuel injection amount Q.

Then, in step S104, the ECU 100 divides the fuel injection amount Q into a main injection amount Qm and a post-injection amount Qp. Thus, the main injection amount Qm and the post-injection amount Qp are calculated. That is, the ECU 100 calculates the main injection amount Qm in the normal control mode based on the engine operation status (for example, the rotation speed and the accelerator opening degree). The ECU 100 further subtracts the main injection amount Qm from the fuel injection amount Q corresponding to the third target A/F to obtain the post-injection amount Qp.

The term "main injection" as used herein refers to a fuel injection contributing mainly to the engine output torque. The main injection is a broad concept including a pilot injection carried out immediately before a substantial main injection and a pre-mixture injection carried out relatively earlier than the substantial main injection. For example, if the main injection involves the pilot injection, the main injection amount Qm is further divided into a pilot injection amount and a substantial main injection amount.

In step S105, the ECU 100 allows the main injection and the post-injection to be carried out by injecting the calculated main injection amount Qm and post-injection amount Qp into the cylinder. Thus, the fuel injection amount Q, the main injection amount Qm, and the post-injection amount Qp are controlled in a feed-forward manner based on the detected intake amount Ga.

In step S106, the ECU 100 determines whether or not the air-fuel ratio detected by the A/F sensor 30, that is, the detected A/F, has converged close to the third target A/F. The ECU 100 determines that the detected A/F has converged close to the third target A/F, for example, when the detected A/F remains within a predetermined range around the third target A/F for a predetermined time.

If the detected A/F fails to have converged close to the third target A/F, the ECU 100 repeatedly carries out steps S103 to S105. If the detected A/F has converged close to the third target A/F, the ECU 100 proceeds to step S107 to acquire the value of the detected A/F.

Then, in step S108, the ECU 100 learns the correction value in accordance with the following procedure. First, the ECU 100 calculates the ratio R = AFr/AFt of the detected A/F (denoted by AFr) to the third target A/F (AFt). The ratio R is a parameter indicative of the magnitude of an error between the detected A/F and the third target A/F. A fuel injection amount Q' required to make the detected A/F equal to the third target A/F is determined by Q' = R x Q. The ratio R is a correction value, that is, a correction coefficient, for the fuel injection amount. This value is used to correct the fuel injection amount during the subsequent rich control.

For example, it is assumed that the third target A/F is 17 and that the detected A/F obtained when the injection amount Q is injected is 18; the injection amount Q is equivalent to the third target A/F and is determined from the detected intake amount Ga. Then, R= 18/17 = 1.0588. The fuel injection amount Q' required to make the detected A/F equal to the third target A/F is 1.0588Q. This means that the injection amount is short by 0.0588Q.

The correction value R thus calculated is stored in the ECU 100. Thus, one learning process is completed.

Then, in step S109, the ECU 100 determines whether or not the intake pressure detected by the intake pressure sensor 17, that is, the detected intake pressure, has decreased to a predetermined target value.

If the detected intake pressure fails to have decreased, the ECU 100 repeatedly carries out steps S103 to S108 during every injection cycle. Thus, the correction value resulting from the post-injection is sequentially learned for every injection cycle until the intake throttling is completed.

On the other hand, if the ECU 100 determines that the detected intake pressure has decreased, this indicates that the intake throttling is completed. Then, the ECU 100 carries out the control and learning for the latter half period (t2 to t3 in Fig. 3) in steps S110 to S114. The control and learning is similar to that for the intake throttling delay period except that the post-injection is replaced with the after-injection.

First, in step S110, the fuel injection amount Q equivalent to the third target A/F is calculated from the detected intake amount Ga. Then, in step S111, the ECU 100 divides the fuel injection amount Q into the main injection amount Qm and the after-injection amount Qa. Thus, the main injection amount Qm and the after-injection amount Qa are calculated. In step S112, the ECU 100 allows the main injection amount Qm and the after-injection amount Qa to be injected into the cylinder at predetermined timings to carry out the main injection and the after-injection. At this point of time, the detected A/F has already converged close to the third target A/F. Thus, no step corresponding to step S106 is carried out.

In step S113, the ECU 100 acquires the value of the detected A/F. In step S114, the ECU 100 learns the correction value R.

In step S115, the ECU 100 determines whether or not the number of samples of learned correction values has reached a predetermined value N (for example, N = 10) or a larger value. Here, the number of samples corresponds to the total number of samples obtained since the beginning of the post-learning regardless of whether the post-learning or the after-learning.

If the number of samples has not reached the predetermined value N or larger, the ECU 100 repeatedly carries out steps S110 to S114 during every injection cycle. Thus, the ECU 100 sequentially learns the correction value resulting from the after-injection for every injection cycle until the number of samples reaches the predetermined value N or a larger value.

On the other hand, when the number of samples reaches the predetermined value N or a larger value, the after-learning ends. In step S116, the ECU100 learns the final correction value. That is, the average value Rₐᵥ of the all samples Rₙ (n = 1, 2, ...) is calculated and stored as the final correction value.

Alternatively, the correction values resulting from the post-learning and the after-learning may be corrected differently depending on the injection form, and then all the correction values may be averaged. This process is intended to take the following into account: the difference in the time interval from the main injection between the post-injection and the after-injection, and the difference, between the post-injection and the after-injection, in variation in fuel pressure observed when the needle valve of the injector 7 is opened and closed. For example, the correction value obtained from the post-learning is corrected by being multiplied by a predetermined correction coefficient K1. The correction value obtained from the after-learning is corrected by being multiplied by a predetermined correction coefficient K2. The corrected correction values are then averaged.

When the learning finishes as described above, the ECU 100 ends the intermediate lean control mode and sifts to the reach control mode. Thus, the switching from the lean state to the rich state ends.

First, in step S117, the ECU 100 calculates the fuel injection amount Q equivalent to the target A/F (hereinafter referred to as the "second target A/F") equal to the second air-fuel ratio (in the present example, 14.0). That is, the detected intake amount Ga is divided by the second target A/F to obtain the fuel injection amount Q.

Then, in step S118, the ECU 100 corrects the fuel injection amount Q using the learned final correction value Rₐᵥ. The corrected fuel injection amount Q' is calculated by Q' = Rₐᵥ x Q.

Then, in step S119, the ECU 100 allows the corrected fuel injection amount Q' to be injected into the cylinder in the form of only the main injection, a combination of the main injection and the after-injection, or a combination of the main injection and the post-injection. As a result, the NOx catalyst 22 is supplied with exhaust gas with an air-fuel ratio of a value very close to the second target A/F, thus improving the accuracy of the air-fuel ratio. The NOx catalyst 22 is thus suitably recovered. As described above, the fuel injection amount and air-fuel ratio during the rich control are also controlled in a feed-forward manner based on the detected intake amount.

As described above, during the rich control, the detected value from the A/F sensor 30 may be shifted from the real value under the effect of hydrogen or HC. At this time, it is difficult to accurately control the air-fuel ratio even by feedback-controlling the air-fuel ratio based on the detected value from the A/F sensor 30. In the present example, during the rich control, the fuel injection amount and the air-fuel ratio are controlled in a feed-forward manner, with the fuel injection amount corrected using the learned correction value. Thus, the air-fuel ratio can be accurately controlled.

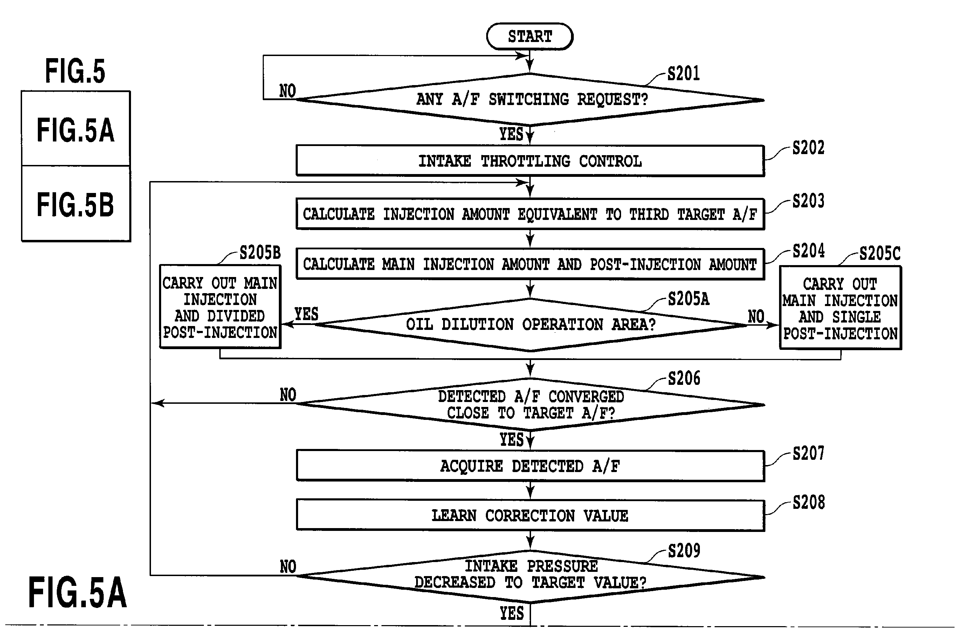

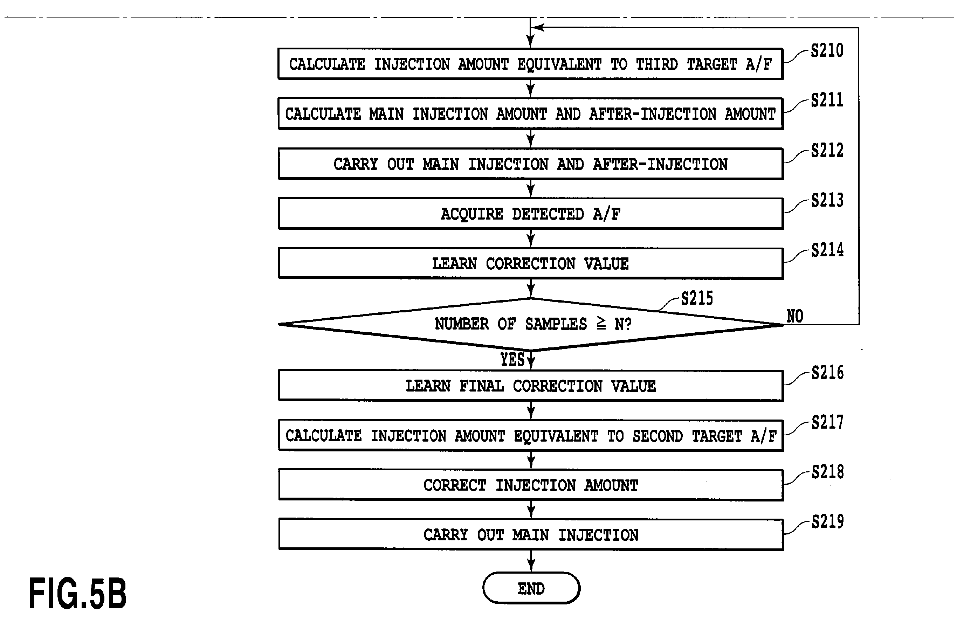

Now, a modification of the present example will be described. Fig. 5A and Fig. 5B illustrate an air-fuel ratio switching control and learning process according to a first modification. The first modification is different from the basic example illustrated in Fig. 4A and Fig. 4B only in the portion of step S105. Hence, steps of the first modification which are similar to corresponding steps of the basic example carry the same numbers plus 200 and will not be described below. Mainly differences from the basic example will be described.

The first modification is characterized in that when the post-injection is carried out, one of the divided post-injection and the single post-injection is performed depending on the engine operation status. That is, when the post-injection is carried out, the intra-cylinder temperature may be high in a certain operation area, forcing the post-injection to be retarded. At this time, the post-injection is carried out when a piston moves relatively far down from the top dead center. Hence, fuel spray reaches the inner wall of the cylinder and the fuel may dilute oil attaching to the inner wall of the cylinder.

Thus, to prevent the dilution of oil, the post-injection is divided into a plurality of steps for such an operation area (hereinafter referred to as an "oil dilution operation area"). This is referred to as a divided post-injection. The divided post-injection serves to weaken the penetration force of the spray during each injection, preventing impingement of the fuel spray on inner wall of the cylinder and the dilution of the oil. On the other hand, in the areas other than the oil dilution operation area, the post-injection is carried out as one step, that is, a single step. This is referred to as a single post-injection.

The oil dilution operation area is experimentally specified and stored in the ECU 100.

As illustrated in Fig. 5A and Fig. 5B, in the first modification, steps S205A to 205C are carried out instead of step S105 of the basic example. First, in step S205A, the ECU 100 determines whether or not the current engine operation status belongs to the oil dilution operation area.

If the current engine operation status belongs to the oil dilution operation area, the process proceeds to step S205B where the main injection and the divided post-injection are carried out. On the other hand, if the current engine operation status does not belong to the oil dilution operation area, the process proceeds to step S205C where the main injection and the single post-injection are carried out.

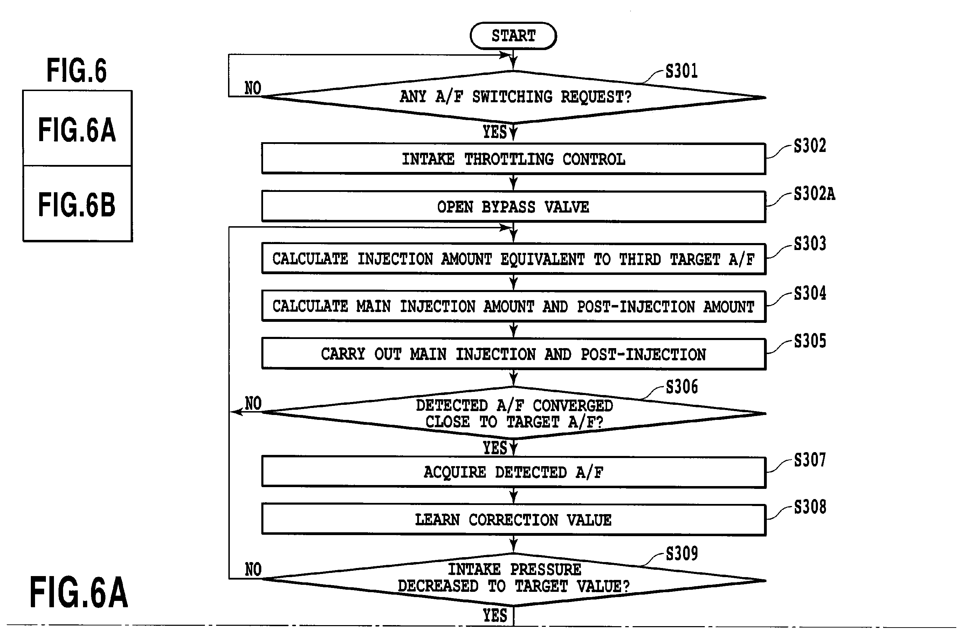

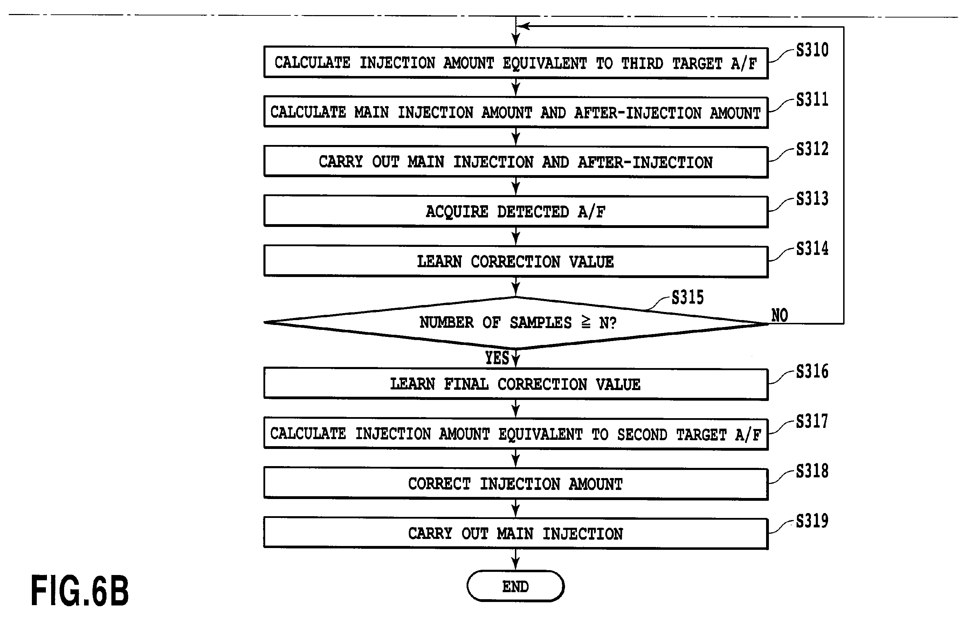

Now, a second modification of the present example will be described. Fig. 6A and Fig. 6B illustrate an air-fuel ratio switching control and learning process according to a second modification. The second modification is different from the basic example illustrated in Fig. 4A and Fig. 4B only in that a step is added to between step S102 and step S103 of the basic example. Hence, steps of the first modification which are similar to corresponding steps of the basic example carry the same numbers plus 300 and will not be described below. Mainly differences from the basic example will be described.

The second modification is characterized in that at least when the post-injection is carried out, the bypass valve 26 is opened. That is, the post-injection causes a relatively large amount of HC to be discharged from the inside of the cylinder. Upon passing through a turbine 8T of the turbocharger 8, HC attaches to the inside of the turbine 8T, causing coking or a decrease in learning accuracy. Thus, in the second modification, the bypass valve 26 is opened at least when the post-injection is carried out. This allows exhaust gas with a high HC concentration to bypass the turbine 8T, preventing possible coking or a possible decrease in learning accuracy.

In particular, here, the bypass valve 26 is open while the after-injection or the rich control is being performed. While the after-injection or the rich control is being performed, the concentration of HC in exhaust gas is high. Thus, opening the bypass valve allows coking and the like to be further prevented.

As illustrated in Fig. 6A and Fig. 6B, step S302A is carried out between step S302 and step S303. In step S302A, the bypass valve is opened.

If the result of the determination in steps S306 and S309 is negative, the process returns to step S303.

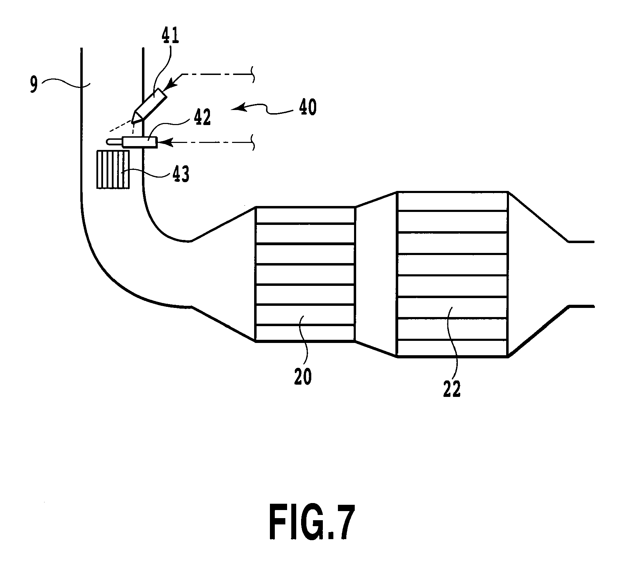

Now, a third modification of the present example will be described. In the third modification, as shown in Fig. 7, a burner device 40 is provided in the exhaust passage 9 in the engine 1. In the illustrated example, the burner device 40 is disposed before the oxidation catalyst 20 and downstream of the turbine 8T of the turbocharger 8 and a bypass passage connection.

The burner device 40 generates heating gas and feeds the generated heating gas to each of the catalysts located downstream of the burner device 40 to warm up each catalyst (particularly the NOx catalyst 22) and maintain and promote the active state of the catalyst. The burner device 40 includes a fuel supply nozzle 41, a glow plug 42, and an oxidation catalyst 43 arranged in this order from the upstream side. The fuel supply nozzle 41 and the glow plug 42 are activated and inactivated by the ECU 100.

When the burner device 40 is activated, fuel is injected and fed from the fuel supply nozzle 41 into the exhaust passage 9, and the glow plug 42 is energized. Then, a rich air-fuel mixture formed of the fuel fed from the fuel supply nozzle 41 and gas present in the exhaust passage 9 is ignited by the glow plug 42 or at least oxidized. The ignited or oxidized air-fuel mixture passes through the oxidation catalyst 43, where the air-fuel mixture is further combusted or oxidize.

Thus, hot heating gas is discharged from the oxidation catalyst 43 and fed to each catalyst. Consequently, each catalyst can be warmed up, with the active state of the catalyst maintained and promoted. In particular, the burner device 40 is effective for improving cold emission immediately after the cold start of the engine.

Here, the oxidation catalyst 43 is configured to occupy a part of the cross section of the exhaust passage 9. Thus, only part of the gas in the exhaust passage 9 passes through the oxidation catalyst 43. The gas flows slower inside the oxidation catalyst 43 than outside the oxidation catalyst 43. Hence, a sufficient response time can be provided inside the oxidation catalyst 43, advantageously allowing an increase in the temperature of the heating gas. When the oxidation catalyst 43 is sufficiently hot, the glow plug 42 may be stopped to allow the air-fuel mixture to be directly combusted in the oxidation catalyst 43. On the other hand, when the oxidation catalyst 43 is not sufficiently hot, for example, immediately after the cold start of the engine, the glow plug 42 is preferably activated. In order to allow fuel injected from the fuel supply nozzle 41 to be efficiently guided to the glow plug 42 and the oxidation catalyst 43, an impact member may be provided such that the injected fuel impacts and bounces from the impact member.

The third modification is an engine including the above-described burner device 40 and characterized in that the glow plug 42 of the burner device 40 is activated (turned on) at least when the post-injection is carried out. That is, the post-injection involves discharge of a relatively large amount of HC from the inside of the cylinder. Thus, activating the glow plug 42 at this time allows the burner device 40 to be activated utilizing the discharged HC. This essentially eliminates the need to feed fuel from the fuel supply nozzle 41. Activating the burner device 40 during learning allows the NOx catalyst 22 to be heated to increase the temperature of the NOx catalyst during the rich control following the learning. Hence, the activity of the NOx catalyst can be promoted to suitably recover the NOx catalyst.

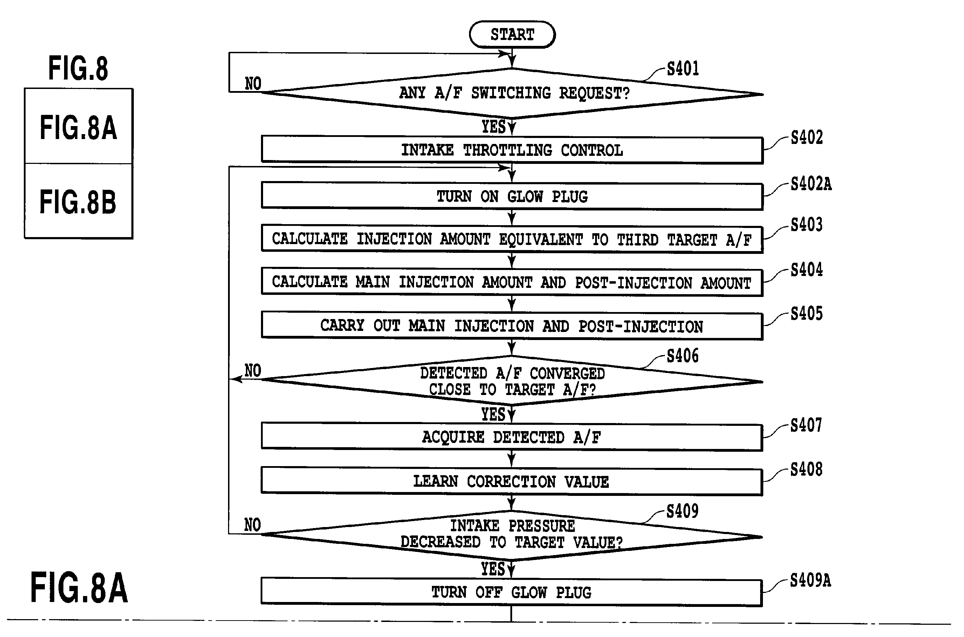

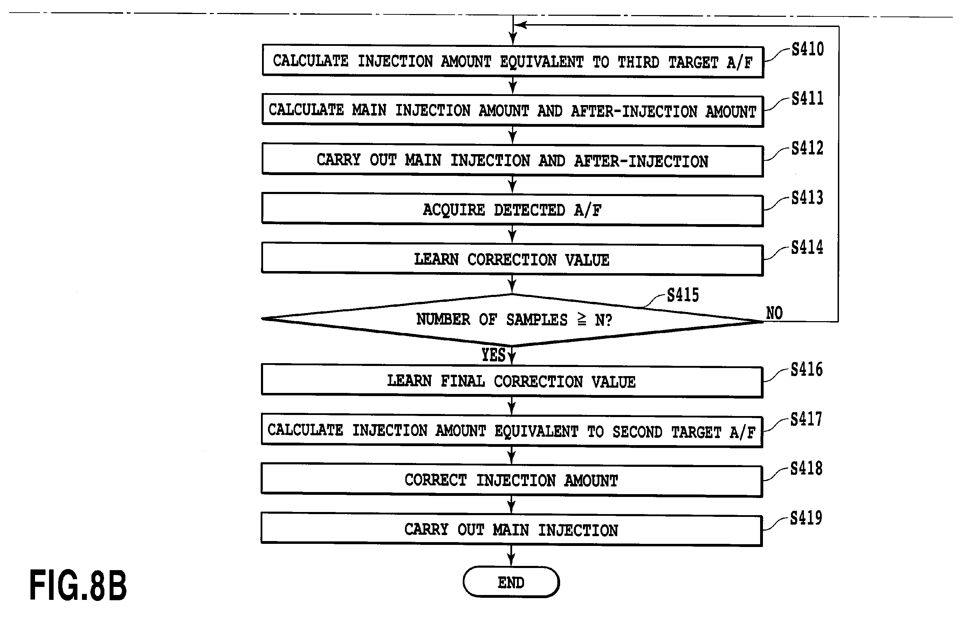

Fig. 8A and Fig. 8B illustrate an air-fuel ratio switching control and learning process according to the third modification. The third modification is different from the basic example illustrated in Fig. 4A and Fig. 4B only in that a step is added to between steps S102 and S103 and between steps S109 and S110 of the basic example. Hence, steps of the third modification which are similar to corresponding steps of the basic example carry the same numbers plus 400 and will not be described below. Mainly differences from the basic example will be described.

As shown in Fig. 8A and Fig. 8B, step S402A is carried out between step S402 and step S403. In step S402A, the glow plug 42 of the burner device 40 is activated (turned on). Thus, HC generated during the subsequent post-injection is ignited and combusted by the glow plug 42. This allows the burner device 40 to be activated without the need to activate the fuel supply nozzle 41.

On the other hand, if the ECU 100 determines in step S409 that the detected intake pressure has decreased to the target value, then in step S409A, the glow plug 42 is inactivated (turned off). Thereafter, the process proceeds to step S410. If the result of the determination in step S406 or S409 is negative, the process returns to step S402A.

The glow plug 42 may be similarly activated when the after-injection is carried out. Also at this time, the HC in the discharged gas has a higher concentration than during normal operation and is thus expected to exert a heating effect.

In the third modification, an electrically heated catalyst may be provided instead of the burner device 40 so as to be activated at least when the post-injection is carried out. The electrically heated catalyst is electrically heated by definition and is disclosed in, for example, Japanese Patent Laid-Open No. 2000-097015. If activated when the post-injection is carried out, the electrically heated catalyst can combust a large amount of HC discharged during the post-injection to generate heating gas. As a result, the NOx catalyst 22 and the like can be heated.

The third medication may be suitably combined with the second modification (turbo bypass). This is because the combination exerts both effects of preventing coking and the like and heating the catalysts.

The embodiment of the present invention has been described. The present invention may adopt other embodiments. For example, the present invention is applicable to internal combustion engines other than the diesel engine, that is, the compression ignited internal combustion engine. The present invention is applicable to, for example, spark ignited internal combustion engines, particularly direct-injection lean burn gasoline engines. The above-described numerical values are illustrative and can be appropriately changed. The first to third modifications may be combined together in any manner.

The embodiment of the present invention is not limited to the above-described one. The present invention includes any modifications, applications, and equivalents embraced by the concepts of the present invention defined by the claims. Therefore, the present invention should not be interpreted in a limited manner but is applicable to any other technique belonging to the scope of the concepts of the present invention.

## Claims

1. A control device for an internal combustion engine which is configured to switch an air-fuel ratio of an air-fuel mixture in a cylinder from a first air-fuel ratio leaner than stoichiometry for normal operation to a second air-fuel ratio richer than the stoichiometry and to carry out intake throttling during a switching period from beginning to end of the switching to control the air-fuel ratio of the air-fuel mixture in the cylinder to a third air-fuel ratio richer than the first air-fuel ratio and leaner than the stoichiometry, while learning a correction value for a fuel injection amount, the control device being **characterized in that**,
during the switching period, before the intake throttling is completed, the control device carries out such a post-injection as prevents injected fuel from being combusted and learns the correction value, and after the intake throttling is completed, the control device carries out such an after-injection as allows the injected fuel to be incompletely combusted and learns the correction value.

2. The control device for the internal combustion engine according to Claim 1, **characterized in that** a catalyst and an air-fuel ratio sensor are provided in an exhaust passage in the internal combustion engine in order from an upstream side, and the switching to the second air-fuel ratio is intended to recover the catalyst.

3. The control device for the internal combustion engine according to Claim 2, **characterized in that**,
in controlling the air-fuel ratio to the third air-fuel ratio, the control device injects, into the cylinder, fuel in an amount calculated from a detected value from an intake amount sensor and which is equivalent to the third air-fuel ratio, and
in learning the correction value, the control device calculates the correction value based on the value of the third air-fuel ratio and the detected value from the air-fuel ratio sensor resulting from the injection of the fuel in the amount equivalent to the third air-fuel ratio.

4. The control device for the internal combustion engine according to any one of Claims 1 to 3, **characterized in that** after switching the air-fuel ratio to the second air-fuel ratio, the control device uses the learned correction value to correct the fuel injection amount.

5. The control device for the internal combustion engine according to Claim 4, **characterized in that** in correcting the fuel injection amount using the learned correction value, the control device calculates a fuel injection amount equivalent to the second air-fuel ratio calculated from the detected value from the intake amount sensor and then corrects the fuel injection amount equivalent to the second air-fuel ratio, using the learned correction value.

6. The control device for the internal combustion engine according to any one of Claims 1 to 5, **characterized in that** in learning the correction value, the control device calculates a plurality of correction values corresponding to a plurality of fuel injections and then determines an average of the correction values corresponding to a final correction value.

7. The control device for the internal combustion engine according to any one of Claims 1 to 6, **characterized in that** in carrying out the post-injection, the control device performs one of a divided post-injection and a single post-injection depending on an operation status of the internal combustion engine.

8. The control device for the internal combustion engine according to any one of Claims 1 to 7, **characterized in that**,
a turbocharger is provide in the exhaust passage in the internal combustion engine, and the internal combustion engine further comprises a bypass passage which bypasses the turbocharger and a bypass valve configured to open and close the bypass passage, and
the bypass valve is opened at least when the post-injection is carried out.

9. The control device for the internal combustion engine according to any one of Claims 1 to 8, **characterized in that**,
a burner device is provided in the exhaust passage in the internal combustion engine, and the burner device comprises a fuel supply nozzle, a glow plug, and an oxidation catalyst, and
the control device activates the glow plug of the burner device at least when the post-injection is carried out.

10. The control device for the internal combustion engine according to any one of Claims 1 to 8, **characterized in that**,
an electrically heated catalyst is provided in the exhaust passage in the internal combustion engine, and
the control device activates the electrically heated catalyst at least when the post-injection is carried out.
